# FASCICULE DE BREVET EUROPEEN

(11) **EP 3 671 367 B1**
(45) Date de publication et mention de la délivrance du brevet: **29.01.2025**
(21) Numéro de dépôt: 18215659.6
(22) Date de dépôt: 21.12.2018
(51) Int. Cl.: G04B 29/04, F16B 25/00

(54) **ASSEMBLAGE COMPRENANT UN SUPPORT, UNE PLATINE ET DES MOYENS DE FIXATION, NOTAMMENT POUR UNE PIECE D'HORLOGERIE**
ANORDNUNG AUS EINER HALTERUNG, EINER PLATINE UND BEFESTIGUNGSMITTELN, INSBESONDERE FÜR EINE UHR
ASSEMBLY COMPRISING A SUPPORT, A PLATE AND ATTACHMENT MEANS, IN PARTICULAR FOR A TIMEPIECE

(43) Date de publication de la demande: 24.06.2020
(73) Titulaire: ETA SA Manufacture Horlogère Suisse, 2540 Grenchen (CH)
(72) Inventeur: BALMER, Raphaël, 2824 Vicques (CH)
(74) Mandataire: ICB SA

(56) Documents cités:
- EP-A1- 0 654 717
- EP-A1- 1 804 142
- FR-A- 1 234 518
- FR-A1- 2 519 159
- JP-B2- 3 446 113
- ANONYMOUS: "Histoire des vis autoperçeuses Faynot", 14 April 2021 (2021-04-14), pages 1 - 12, XP055930036, Retrieved from the Internet <URL:https://www.faynot.com/histoire-vis-autoperceuse/> [retrieved on 20220610]

## Description

### Domaine technique de l'invention

La présente invention concerne le domaine des assemblages comprenant un support, une platine et des moyens de fixation, notamment un support de mouvement horloger et une platine moteur d'une pièce d'horlogerie.

### Arrière-plan technique de l'invention

Dans les techniques d'assemblage d'un module et d'un support, par exemple un support de mouvement horloger et une platine moteur d'une pièce d'horlogerie, il est connu, dans le domaine des montres, d'utiliser des vis auto-taraudeuses comme moyens de fixation. Ce type de vis est introduit dans un logement ayant une paroi lisse, et dans lequel elles sculptent un taraudage, lorsqu'elles sont vissées dans le logement.

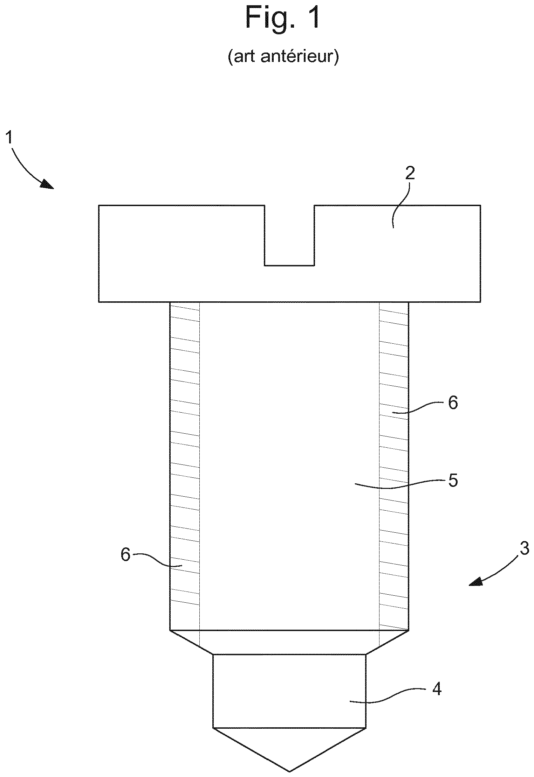

La figure 1 montre un exemple de vis auto-taraudeuse 1 de l'état de la technique. La vis 1 comprend une tête élargie 2 et un corps longitudinal 3, dont une première section 4 agencée à l'opposé de la tête 2 est lisse, et une deuxième section 5 allant de la tête 2 à la première section 4 est entourée d'un filetage 6 en spirale. La première section 4 est plus étroite que la deuxième section 5, et a un diamètre proche de celui du logement. La première section permet de positionner la vis dans le logement pour la maintenir droite. Lorsque la vis 1 est vissée dans le logement, le filetage 6 s'enfonce progressivement dans la paroi du logement, car le diamètre de la deuxième section avec le filetage 6 est plus large que celui du logement.

FR 1 234 518 A (FELDMAN) 18 octobre 1960 (1960-10-18) divulgue l'assemblage d'une platine supérieure 2 et d'une platique inférieure 1, la platine inférieure 1 comprenant des piliers 5 avec des trous dans lesquels des vis auto-taraudeuses 5A sont visées dans le logement recevant les vis. Le corps de la vis 5A a une forme conique et comprend un filetage.

Ces vis sont par exemple pratiques pour assembler un support de mouvement horloger à une platine moteur d'une pièce d'horlogerie. En effet, on préforme des logements sans taraudage, on positionne le support sur la platine, et on visse les vis dans les logements. L'un des deux éléments, par exemple la platine, est muni du ou des logements, de préférence fait dans une matière plus tendre que la vis en métal, par exemple en plastique. Ainsi, chaque vis taraude un logement et assemble les deux éléments l'un à l'autre.

Cependant, un premier désavantage d'une telle vis tient au fait qu'il faut visser pendant un temps assez long pour tarauder le logement et y fixer la vis. En effet, le taraudage se fait petit à petit, car seule une partie du filetage à l'extrémité de la deuxième section forme le taraudage. Ainsi, chaque vis demande un certain nombre de tours de vis, et par conséquent un temps substantiel de manipulation, alors qu'un montage doit généralement être rapide.

Un autre désavantage est lié au positionnement préalable de la vis dans le logement avant le vissage. En effet, la première section sert seulement de guidage et ne taraude pas le logement de sorte qu'une partie du logement recevant la première section n'a pas pour fonction de fixer la vis dans le logement. Ainsi, la première section est assez courte pour éviter de perdre trop d'espace, car l'élément ne doit pas être trop épais, et prendre trop de place, ce qui serait gênant par exemple dans un boîtier de montre. Comme la première section est courte, la vis ne tient pas bien dans le logement avant le vissage, et risque facilement de sortir du logement.

### Résumé de l'invention

La présente invention a notamment pour but de pallier les différents inconvénients des dispositifs connus de l'art antérieur.

Plus précisément, un objectif de l'invention est de procurer un assemblage facile et rapide à assembler et qui garantisse un bon maintien du support à la platine.

L'invention a également pour objectif de fournir un assemblage qui soit robuste et peu coûteux.

Pour cela l'invention se rapporte à un assemblage comprenant un support et une platine, notamment un support de mouvement horloger et une platine moteur d'une pièce d'horlogerie, ainsi que des moyens de fixation du support à la platine, les moyens de fixation comprenant :
- une vis auto-taraudeuse configurée pour former un taraudage lorsqu'elle est vissée, la vis comprenant une tête et un corps longitudinal, le corps comprenant une extrémité à l'opposé de la tête et un filetage agencé autour du corps, le corps ayant un diamètre variable selon le premier axe du corps, qui est plus large au niveau de la tête jusqu'à un diamètre plus petit à l'extrémité,
- un premier trou traversant le support ou la platine,
- un logement agencé respectivement dans la platine ou le support selon l'agencement du premier trou, le logement ayant une forme définie par une paroi et une ouverture pour recevoir le corps de la vis,
de sorte que, le corps de la vis passant à travers le premier trou, la forme du logement est taraudée, lorsque la vis est vissée dans le logement, le corps de la vis étant cylindrique et comprenant au moins deux sections cylindriques, une première section à l'extrémité du corps et une deuxième section en amont de la première section, la deuxième section étant plus large que la première section,et le logement comprenant au moins deux sections cylindriques, une première section partant de l'ouverture du logement et une deuxième plus en profondeur dans le logement, la première section étant plus large que la deuxième section.

Le dispositif est remarquable en ce que la forme prédéfinie du logement a une largeur variable, qui est plus large au niveau de l'ouverture jusqu'à un diamètre plus petit au fond du logement, la forme correspondant à celle du corps de la vis.

Ainsi, le logement étant plus large à l'ouverture qu'au fond du logement, il s'adapte à la forme de la vis à plusieurs niveaux. D'une part, une plus grande partie de la vis peut être insérée dans le logement préalablement au vissage. La vis est mieux maintenue dans le logement, selon une direction correspondant à celle du vissage. Cette caractéristique facilite le vissage, car il n'y a pas besoin de tenir la vis à la main ou avec un instrument pour la visser, la vis étant guidée par le logement, sans risque de sortir du logement.

D'autre part, le corps de la vis et le logement ayant une forme sensiblement identique, le filetage de la vis est plus rapidement en contact avec la paroi sur toute la hauteur du corps de la vis. Par conséquent, le vissage requiert moins de tours pour atteindre un vissage complet de la vis dans le logement.

Selon un mode de réalisation particulier de l'invention, le filetage est agencé sur toute la longueur du corps. Ainsi, le corps de la vis entier sert à la fixation. Il n'existe pas de partie du corps de la vis dans le logement sans avoir pour fonction de fixation au logement, comme dans l'état de l'art décrit précédemment.

Selon un mode de réalisation particulier de l'invention, le corps de la vis et le logement ont chacun une forme de cône, une base d'un cône étant disposée au niveau de la tête pour la vis, et une base d'un autre cône étant formée par l'ouverture pour le logement.

Selon un mode de réalisation particulier de l'invention, le logement est fermé au fond opposé à l'ouverture.

Selon un mode de réalisation particulier de l'invention, le logement est prolongé d'une collerette de retenue agencée au-delà d'un deuxième trou passant à travers le stator et le noyau du moteur, lorsque la platine comporte le logement.

Selon un mode de réalisation particulier de l'invention, la collerette est plus large que le deuxième trou, de sorte que le stator et le noyau soient maintenus à la platine.

Selon un mode de réalisation particulier de l'invention, le logement est formé d'un matériau déformable, par exemple en plastique, tel du polyethersulfone ou du polypropylène, éventuellement renforcé de fibres de verre.

Selon un mode de réalisation particulier de l'invention, la vis est en métal.

Selon un mode de réalisation particulier de l'invention, le corps de la vis a une longueur sensiblement égale à la longueur du logement et celle du premier trou.

Selon un mode de réalisation particulier de l'invention, la tête est plus large que le premier trou.

Selon un mode de réalisation particulier de l'invention, la tête est plus large que le premier trou.

Selon un mode de réalisation particulier de l'invention, l'assemblage comprend un module moteur muni de la platine et d'un moteur configuré pour mouvoir le mouvement d'horlogerie porté par le support, le moteur étant muni d'un noyau de bobine, d'un stator, et d'un circuit d'activation du moteur maintenus par la platine.

### Brève description des figures

D'autres caractéristiques et avantages de l'invention apparaîtront plus clairement à la lecture de la description détaillée qui suit d'un exemple de réalisation de l'invention, cet exemple étant donné à titre purement illustratif et non limitatif, en liaison avec le dessin annexé sur lequel :
- la figure 1 est une vue en coupe d'une vis auto-taraudeuse selon un mode de réalisation connu de l'état de l'art, et
- la figure 2 est une vue schématique en coupe d'un assemblage selon l'invention, lorsque la vis est maintenue dans le logement avant le vissage, et
- la figure 3 une vue schématique en coupe d'un assemblage selon l'invention, lorsque la vis est insérée dans le logement après le vissage.

### Description détaillée de l'invention

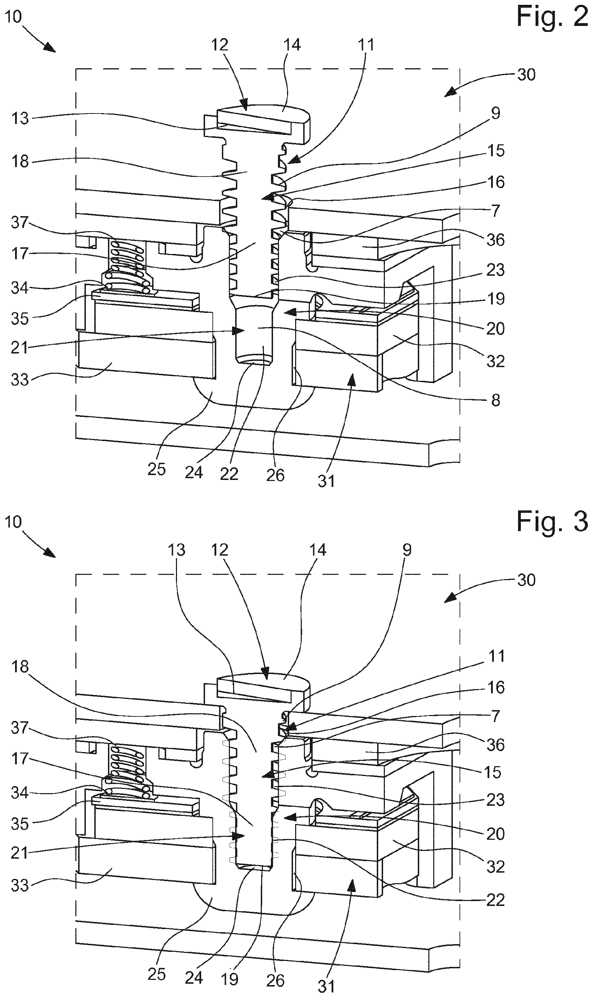

Sur les figure 2 et 3, l'assemblage 10 comprend un support 30 de mouvement horloger d'une pièce d'horlogerie, telle une montre bracelet. Le mouvement, qui n'est pas représenté sur les figures, permet en général de déplacer des aiguilles sur un cadran de la pièce d'horlogerie. L'assemblage comprend un module moteur muni d'une platine 20 et d'un moteur 31 configuré pour mouvoir le mouvement d'horlogerie porté par le support 30. Le moteur 31 est muni d'un stator 33 et d'un noyau 32 de bobine pour activer un rotor, non représenté sur les figures, ainsi que d'un circuit de commande électronique 36 du moteur 31, et un circuit d'activation 35 de la bobine pour activer la rotation du rotor. Le stator 33, le noyau 32 et le circuit d'activation 35 sont maintenus sous la platine 20, tandis que le circuit de commande électronique 36 est agencé entre la platine 20 et le support 30, lorsque la platine 20 et le support 30 sont assemblés l'un à l'autre. Un ressort 34 permet de faire une connexion entre le circuit de commande 36 et le circuit d'activation 35, pour transmettre un courant électrique et permettre l'activation de la bobine. Le ressort 34 est disposé dans un passage 37 à travers la platine pour connecter les deux circuits.

L'assemblage 10 comprend en outre des moyens de fixation du support 30 à la platine 20. Ainsi, les deux éléments sont fixés l'un à l'autre pour être mis en place dans la pièce d'horlogerie. Les moyens de fixation comprennent une vis auto-taraudeuse 11 et un logement 21 agencé dans la platine 20, ainsi qu'un premier trou 16 traversant le support 30.

La vis 11 comprend une tête 12 et un corps longitudinal 15 autour d'un premier axe, le corps 15 comprenant une extrémité 19 à l'opposé de la tête 12 et un filetage 9 agencé autour du corps 15. La tête 12 comporte un plateau 14 muni d'une fente 13 permettant la rotation de la vis à l'aide d'un tournevis. La fente 13 est droite sur les figures, mais elle pourrait aussi être cruciforme ou d'une autre forme usuelle pour une vis. L'extrémité 19 est ici plate, mais pourrait aussi être pointue. Le filetage 9 a une forme hélicoïdale avec un pas et une largeur prédéterminées. Le pas du filetage a par exemple une valeur de 0.25mm.

Le logement 21 est formé dans la platine 20 du moteur autour d'un second axe longitudinal. Le logement 21 a une forme prédéfinie comprenant une paroi intérieure 8 délimitant la forme, ainsi qu'une ouverture 7 pour le passage de la vis 11. Le logement 21 est de préférence fermé au fond 24 opposé à l'ouverture 7. Le logement 21 est prolongé d'une collerette 25 de retenue agencée au-delà d'un deuxième trou 26 opéré à travers le stator 33, le circuit d'activation 35 et le noyau 32 du moteur 31. La paroi 8 du logement 21 passe à travers le deuxième trou 26, le fond 24 du logement 21 étant formé en partie par la collerette 25. La collerette 25 est plus large que le deuxième trou 26, de manière à retenir le stator 33, le circuit d'activation 35 et le noyau 32 contre la platine.

Lorsque la vis 11 est vissée dans le logement 21, le corps 15 passe à travers le premier trou 16, tandis que le plateau 14 de la tête 12 étant plus large que le premier trou 16, celle-ci 12 reste bloquée sur le support 30, hors du premier trou 16. Le premier et le deuxième axe sont sensiblement colinéaires après le vissage, ainsi que préalablement au vissage, lorsque la vis est en partie positionnée dans le logement.

De préférence, le corps 15 de la vis 11 a une longueur sensiblement égale à la longueur du logement 21 et de celle du premier trou 16. Ainsi, on évite que l'assemblage ne soit trop épais et ne prenne trop de place, par exemple dans un boitier de montre.

La vis 11 est configurée pour former un taraudage dans le logement 21 lorsqu'elle est visée à l'intérieure de celui-ci. A cette fin, le filetage 9 est configuré pour s'enfoncer dans la paroi 8 du logement 21 lors du vissage. Le corps 15 et le filetage 9 de la vis 11 sont de préférence faits d'un matériau dur tandis que la paroi 8 du logement 21 est fait d'un matériau plus mou que celui de la vis 11. Ainsi, le filetage 9 de la vis 11 taraude aisément la paroi 8 du logement 21. La vis 11 est par exemple en métal, de préférence en acier décolleté. Le logement 21 est formée d'un matériau déformable, par exemple en matériau plastique, tel du polyethersulfone ou du polypropylène, éventuellement renforcé de fibres de verre.

Le corps 15 de la vis 11 a un diamètre variable selon le premier axe du corps, le corps 15 étant plus large sous de la tête 12 jusqu'à un diamètre plus petit à l'extrémité 19.

Selon l'invention, la forme prédéfinie du logement 21 a une largeur variable correspondant à celle du corps 15, de sorte que la forme prédéfinie du logement 21 et le corps 15 de la vis 11 coopèrent pour que le corps 15 de la vis 11 soit maintenu par le logement 21 sur toute la hauteur du corps 15 après le vissage. En outre, la largeur de la vis 11 comprenant le corps 15 et le filetage 9 est plus important que celui du logement 21 à même hauteur, lorsque la vis est vissée dans le logement. Ainsi le filetage 9 taraude le logement 21, quelle que soit sa hauteur sur le corps 15.

Selon l'invention, représenté sur les figures 2 et 3, le corps 15 de la vis 11 est cylindrique et comprend au moins deux sections cylindriques 17, 18, une première section 17 s'étendant depuis l'extrémité 19 du corps 15, et une deuxième section 18 s'étendant en amont de la première section 17, par exemple depuis la tête 12 de la vis 11 jusqu'à la première section 17. La deuxième section 18 étant plus large que la première section.

Ainsi, selon l'invention, la forme du logement 21 comprend au moins deux sections cylindriques, une première section 23 partant de l'ouverture 7 du logement, et une deuxième section 22 plus en profondeur dans le logement 21, la première section 23 étant plus large que la deuxième section 22.

Selon différentes variantes d'un premier mode de réalisation, non représentés sur les figures, le corps de la vis et le logement peuvent avoir trois ou quatre sections, voire plus selon la longueur de la vis.

Grâce à l'invention, la variation de la largeur du corps 15 et de la forme correspondante du logement 21 permet qu'une grande partie du filetage 9 taraude le logement 21 simultanément. Ainsi, le vissage est plus rapide qu'avec une vis classique qui taraude le logement petit à petit avec une seule partie du filetage. On gagne du temps car la vis demande moins de manipulation, c'est-à-dire moins de tours de vis. Par exemple, pour une vis de même longueur et de même pas, une vis auto-taraudeuse classique demande jusqu'à six tours de vis, alors qu'une vis selon l'invention ne demande que trois tours.

En outre, comme on peut le voir sur la figure 2, la vis 11 est bien tenue par le logement 21 avant le vissage, grâce aux formes correspondantes de la vis 11 et celle du logement 21 selon l'invention. En effet, une partie du corps de la vis partant de l'extrémité, peut être insérée dans une première partie du logement 21 pour être tenue verticalement avant le vissage. Dans ce mode de réalisation, la première section 17 s'étendant depuis l'extrémité 19 du corps 15 est insérée dans la première section 23 partant de l'ouverture 7 du logement 21 sans que le filetage ne taraude la paroi 8. On obtient un excellent maintien de la vis dans une bonne direction avant le vissage, afin d'éviter tout risque de chute de la vis ou de guidage dans une mauvaise direction.

Avantageusement, la largeur de la vis au niveau de la première section 17 du corps 15 de la vis 11 avec le filetage 9, est sensiblement égal à la largeur de la première section 23 du logement 21.

De préférence, le filetage 9 est agencé sur toute la longueur du corps 15. Ainsi, le corps entier 15 de la vis 11 sert à tarauder le logement 21 et à fixer le support 30 et la platine 20 ensemble. Dans le premier mode de réalisation, le filetage 9 est donc agencé sur les deux sections cylindriques 17, 18 du corps 15. Comme le montre la figure 3 après vissage, la première section 17 du corps 15 a taraudé la deuxième section 22 du logement 21, tandis que la deuxième section 18 du corps 15 a taraudé la première section 22 du logement 21. Les deux taraudages se sont produits simultanément, ce qui demande un moindre nombre de tours de vis.

Dans la variante de réalisation avec un nombre de sections encore plus important, le vissage est encore plus rapide, car les taraudages de chaque section du logement sont effectués simultanément.

Dans un exemple ne faisant pas partie de l'invention revendiquée, non représenté sur les figures, le corps de la vis et le logement ont chacun une forme de cône. Le premier cône du corps de la vis a une base disposée sous la tête pour la vis, tandis que le sommet est agencé à l'extrémité du corps. Le second cône formé par le logement comporte une base formée par l'ouverture, le sommet étant formé par le fond du logement. Le filetage est de préférence agencé sur toute la hauteur du premier cône. On retrouve les mêmes avantages que ceux du premier mode de réalisation. En particulier, le vissage est encore plus de temps, car la forme conique induit qu'une grande partie du filetage taraude le logement simultanément sur toute la hauteur du corps.

Il va de soi que la présente invention n'est pas limitée aux modes de réalisation qui viennent d'être décrit et que diverses modifications et variantes simples de l'invention peuvent être envisagées par l'homme du métier sans sortir du cadre de l'invention tel que défini par les revendications annexées. En particulier, selon une variante non représentée sur les figures, le premier trou est agencé dans la platine et le logement est agencé dans le support.

## Revendications

1. Assemblage (10) comprenant un support (30) de mouvement horloger et une platine (20) moteur (31) d'une pièce d'horlogerie, ainsi que des moyens de fixation du support (30) à la platine (20), les moyens de fixation comprenant :
- une vis auto-taraudeuse (11) configurée pour former un taraudage lorsqu'elle est vissée, la vis (11) comprenant une tête (12) et un corps longitudinal (15), le corps (15) comprenant une extrémité (19) à l'opposé de la tête (12) et un filetage (9) agencé autour du corps (15), le corps ayant un diamètre variable selon le premier axe du corps (15), qui est plus large au niveau de la tête (12) jusqu'à un diamètre plus petit à l'extrémité (19),
- un premier trou (16) traversant le support (30) ou la platine (20),
- un logement (21) agencé respectivement dans la platine (20) ou le support (30) selon l'agencement du premier trou (16), le logement (21) ayant une forme définie par une paroi (8) et une ouverture (7) pour recevoir le corps (15) de la vis (11),
**caractérisé en ce que**
la forme du logement (21) a une largeur variable, qui est plus large au niveau de l'ouverture (7) jusqu'à un diamètre plus petit au fond (24) du logement (21), la forme correspondant à celle du corps (15) de la vis (11),
de sorte que, le corps (15) de la vis (11) passant à travers le premier trou (16), la forme prédéfinie du logement (21) est taraudée, lorsque la vis est vissée dans le logement,
le corps (15) de la vis (11) étant cylindrique et comprenant au moins deux sections cylindriques, une première section (17) à l'extrémité (19) du corps (15) et une deuxième section (18) en amont de la première section (17), la deuxième section (18) étant plus large que la première section (17),
et le logement (21) comprenant au moins deux sections cylindriques, une première section (23) partant de l'ouverture (7) du logement (21) et une deuxième section (22) plus en profondeur dans le logement (21), la première section (23) étant plus large que la deuxième section (22).

2. Assemblage selon la revendication 1, **caractérisé en ce que** le filetage (9) est agencé sur toute la longueur du corps (15).

3. Assemblage selon la revendication 1 ou 2, **caractérisé en ce que** le logement (21) est fermé au fond (24) opposé à l'ouverture (7).

4. Assemblage selon l'une, quelconque, des revendications précédentes, **caractérisé en ce que** le logement (21) est prolongé d'une collerette (25) de retenue agencée au-delà d'un deuxième trou (26) passant à travers le stator (33) et le noyau (32) d'un moteur, lorsque la platine (20) comporte le logement (21).

5. Assemblage selon la revendication 4, **caractérisé en ce que** la collerette (25) est plus large que le deuxième trou (26), de sorte que le stator (33) et le noyau (32) soient maintenus contre la platine (20).

6. Assemblage selon l'une, quelconque, des revendications précédentes, **caractérisé en ce que** le logement (21) est formé d'un matériau déformable, par exemple en plastique, tel du polyethersulfone ou du polypropylène, éventuellement renforcé de fibres de verre.

7. Assemblage selon l'une, quelconque, des revendications précédentes, **caractérisé en ce que** la vis (11) est en métal.

8. Assemblage selon l'une, quelconque, des revendications précédentes, **caractérisé en ce que** le corps (15) de la vis (11) a une longueur sensiblement égale à la longueur du logement (21) et celle du premier trou (16).

9. Assemblage selon l'une, quelconque, des revendications précédentes, **caractérisé en ce que** la tête (12) est plus large que le premier trou (16).

10. Assemblage selon l'une, quelconque, des revendications précédentes, **caractérisé en ce qu'**il comprend un module moteur muni de la platine (20) et d'un moteur (31) configuré pour mouvoir le mouvement d'horlogerie porté par le support (20), le moteur (31) étant muni d'un noyau (32) de bobine, d'un stator (33), et d'un circuit d'activation (35) du moteur (31) maintenus par la platine (20).

## Patentansprüche

1. Baugruppe (10), die einen Träger (30) für ein Uhrwerk und eine Platine (20) mit einem Motor (31) für eine Uhr sowie Mittel zum Befestigen des Trägers (30) an der Platine (20) umfasst, wobei die Befestigungsmittel Folgendes umfassen:
- eine selbstschneidende Schraube (11), die dazu konfiguriert ist, ein Gewinde zu bilden, wenn sie eingeschraubt wird, wobei die Schraube (11) einen Kopf (12) und einen Längskörper (15) umfasst, wobei der Körper (15) ein dem Kopf (12) gegenüberliegendes Ende (19) und ein um den Körper (15) herum angeordnetes Gewinde (9) umfasst, wobei der Körper einen entlang der ersten Achse des Körpers (15) variierenden Durchmesser aufweist, der am Kopf (12) breiter ist bis zu einem kleineren Durchmesser am Ende (19),
- ein erstes Loch (16), das durch den Träger (30) oder die Platine (20) verläuft,
- einen Sitz (21), der jeweils entsprechend der Anordnung des ersten Lochs (16) in der Platine (20) oder dem Träger (30) angeordnet ist, wobei der Sitz (21) eine Form aufweist, die durch eine Wand (8) und eine Öffnung (7) zum Aufnehmen des Körpers (15) der Schraube (11) definiert ist, **dadurch gekennzeichnet, dass** die Form des Sitzes (21) eine variable Breite aufweist, die an der Öffnung (7) breiter ist bis zu einem kleineren Durchmesser am Boden (24) des Sitzes (21), wobei die Form der des Körpers (15) der Schraube (11) entspricht,
so dass, wenn der Körper (15) der Schraube (11) durch das erste Loch (16) hindurch verläuft, die vordefinierte Form des Sitzes (21) mit einem Gewinde versehen wird, wenn die Schraube in den Sitz eingeschraubt wird,
wobei der Körper (15) der Schraube (11) zylindrisch ist und mindestens zwei zylindrische Abschnitte, einen ersten Abschnitt (17) am Ende (19) des Körpers (15) und einen zweiten Abschnitt (18) oberhalb des ersten Abschnitts (17), umfasst, wobei der zweite Abschnitt (18) breiter ist als der erste Abschnitt (17),
und wobei der Sitz (21) mindestens zwei zylindrische Abschnitte, einen ersten Abschnitt (23), der sich von der Öffnung (7) des Sitzes (21) erstreckt, und einen zweiten Abschnitt (22), der tiefer in dem Sitz (21) ist, umfasst, wobei der erste Abschnitt (23) breiter ist als der zweite Abschnitt (22).

2. Baugruppe nach Anspruch 1, **dadurch gekennzeichnet, dass** das Gewinde (9) entlang der gesamten Länge des Körpers (15) angeordnet ist.

3. Baugruppe nach Anspruch 1 oder 2, **dadurch gekennzeichnet, dass** der Sitz (21) am Boden (24) gegenüber der Öffnung (7) geschlossen ist.

4. Baugruppe nach einem der vorhergehenden Ansprüche, **dadurch gekennzeichnet, dass** der Sitz (21) durch einen Haltebördel (25) verlängert ist, der über ein zweites Loch (26) hinaus angeordnet ist, das durch den Stator (33) und den Kern (32) eines Motors verläuft, wenn die Platine (20) den Sitz (21) enthält.

5. Baugruppe nach Anspruch 4, **dadurch gekennzeichnet, dass** der Bördel (25) breiter ist als das zweite Loch (26), so dass der Stator (33) und der Kern (32) gegen die Platine (20) gehalten werden.

6. Baugruppe nach einem der vorhergehenden Ansprüche, **dadurch gekennzeichnet, dass** der Sitz (21) aus einem verformbaren Material, zum Beispiel Kunststoff, wie Polyethersulfon oder Polypropylen, ausgebildet ist und gegebenenfalls durch Glasfasern verstärkt ist.

7. Baugruppe nach einem der vorhergehenden Ansprüche, **dadurch gekennzeichnet, dass** die Schraube (11) aus Metall ist.

8. Baugruppe nach einem der vorhergehenden Ansprüche, **dadurch gekennzeichnet, dass** der Körper (15) der Schraube (11) eine Länge aufweist, die im Wesentlichen gleich der Länge des Sitzes (21) und der des ersten Lochs (16) ist.

9. Baugruppe nach einem der vorhergehenden Ansprüche, **dadurch gekennzeichnet, dass** der Kopf (12) breiter ist als das erste Loch (16).

10. Baugruppe nach einem der vorhergehenden Ansprüche, **dadurch gekennzeichnet, dass** sie ein Motormodul umfasst, das mit der Platine (20) und einem Motor (31) ausgestattet ist, der dazu konfiguriert ist, das von dem Träger (20) getragene Uhrwerk zu bewegen, wobei der Motor (31) mit einem Spulenkern (32), einem Stator (33) und einer Aktivierungsschaltung (35) des Motors (31) ausgestattet ist, die von der Platine (20) gehalten werden.

## Claims

1. Assembly (10) comprising a support (30) of a horological movement and a motor (31) plate (20) of a timepiece, in addition to means for fastening the support (30) to the plate (20), the fastening means comprising:
- a self-tapping screw (11) configured to form a tapping when screwed, the screw (11) comprising a head (12) and a longitudinal body (15), the body (15) comprising an end (19) opposite the head (12) and a threading (9) arranged around the body (15), the body having a diameter that varies along the first axis of the body (15), which is wider at the head (12) and extends to a smaller diameter at the end (19),
- a first hole (16) passing through the support (30) or the plate (20),
- a recess (21) respectively arranged in the plate (20) or the support (30) according to the arrangement of the first hole (16), the recess (21) having a shape defined by a wall (8) and an opening (7) for receiving the body (15) of the screw (11), **characterised in that** the shape of the recess (21) having a variable width, which is wider at the opening (7) extending to a smaller diameter at the bottom (24) of the recess (21), the shape corresponding to that of the body (15) of the screw (11),
such that, with the body (15) of the screw (11) passing through the first hole (16), the predefined shape of the recess (21) is tapped when the screw is screwed into the recess,
the body (15) of the screw (11) being cylindrical and comprising at least two cylindrical sections, a first section (17) at the end (19) of the body (15) and a second section (18) upstream of the first section (17), the second section (18) being wider than the first section (17),
and the recess (21) comprising at least two cylindrical sections, a first section (23) extending from the opening (7) of the recess (21), and a second section (22) located deeper inside the recess (21), the first section (23) being wider than the second section (22).

2. Assembly according to claim 1, **characterised in that** the threading (9) is arranged along the entire length of the body (15).

3. Assembly according to claim 1 or 2, **characterised in that** the bottom (24) of the recess (21) opposite the opening (7) thereof is closed.

4. Assembly according to any one of the preceding claims, **characterised in that** the recess (21) is extended by a retaining flange (25) arranged beyond a second hole (26) passing through the stator (33) and the core (32) of a motor, when the plate (20) includes the recess (21).

5. Assembly according to claim 4, **characterised in that** the flange (25) is wider than the second hole (26), such that the stator (33) and the core (32) are held against the plate (20).

6. Assembly according to any one of the preceding claims, **characterised in that** the recess (21) is made of a deformable material, for example plastic, such as polyethersulphone or polypropylene, potentially with glass fibre reinforcement.

7. Assembly according to any one of the preceding claims, **characterised in that** the screw (11) is made of metal.

8. Assembly according to any one of the preceding claims, **characterised in that** the body (15) of the screw (11) has a length that is substantially equal to the length of the recess (21) and that of the first hole (16).

9. Assembly according to any one of the preceding claims, **characterised in that** the head (12) is wider than the first hole (16).

10. Assembly according to any one of the preceding claims, **characterised in that** it comprises a motor module provided with the plate (20) and with a motor (31) configured so as to move the horological movement borne by the support (20), the motor (31) being provided with a coil core (32), a stator (33) and a circuit (35) for actuating the motor (31), which are held by the plate (20).
